# DEMANDE DE BREVET EUROPEEN

(11) **EP 0 601 263 A1**
(43) Date de publication de la demande: **15.06.1994**
(21) Numéro de dépôt: 92810984.2
(22) Date de dépôt: 10.12.1992
(51) Int. Cl.: H01M 4/02, H01M 10/04, H01M 4/72

(54) **Batterie électrique et électrodes pour une telle batterie**

(71) Demandeur: Brunner, François, CH-1870 Monthey (CH)
(72) Inventeur: Brunner, François, CH-1870 Monthey (CH)
(74) Mandataire: Fischer, Franz Josef

(57) **Abrégé**

La batterie se compose d'un emplilage d'électrodes (1,3) se présentant chacune sous la forme d'un assemblage de brins (10,30) entrecroisés formant une grille. Chacun des brins comporte une partie support, une partie conductrice et une partie active. Une partie isolante (2), faisant partie de l'électrode ou séparée de celle-ci, sépare chaque électrode de ses voisines.

Vu la relative faible quantité de matériau actif sur chaque électrode, la masse de la batterie sera passablement plus faible que celle d'une batterie usuelle ayant les mêmes caractéristiques électriques.

Il est possible de découper des électrodes ayant des dimensions transversales relativement importantes, des les relier par des moyens de connexion adéquats (73) et de les empiler dans une cuve (7) de relativement faible hauteur afin de préparer une batterie particulièrement bien adaptée pour être utilisée sur un véhicule.

## Description

La présente invention concerne une batterie électrique ainsi que les électrodes qui la constituent. L'un des inconvénients majeurs de certaines batteries usuelles connues est leur poids ou leur masse important, en particulier pour celles dont les électrodes sont constituées d'un alliage comportant un ou plusieurs métaux lourds comme par exemple le plomb, le platine ou le cadmium. Les électrodes constituant ces batteries sont généralement constituées de plaques massives, disposées verticalement et espacées entre elles afin de laisser libres des espaces pour la circulation du liquide diélectrique. Des entretoises ou des plaques isolantes occupent une partie de ces espaces intermédiaires. Vu que les plaques électrodes doivent se supporter elles-mêmes, elles sont relativement épaisses afin d'avoir la résistance mécanique suffisante et comportent donc une quantité de matériau actif lourd en excès de ce qui est strictement nécessaire aux réactions électro-chimique. Ainsi donc, une part importante de la masse d'une batterie conventionnelle provient de ce qu'une quantité importante de matériaux actifs lourds est uniquement nécessaire au maintien mécanique des électrodes.

Cet inconvénient majeur limite fortement l'emploi de telles batteries, notamment pour les véhicules où la masse embarquée est un facteur important du rendement énergétique dudit véhicule.

Un premier but de l'invention est de proposer des électrodes pour batteries, constituées d'une autre manière que les électrodes connues, permettant ainsi de diminuer fortement leur masse pour une capacité de charge donnée et par conséquent la masse totale de la batterie.

Un autre but de l'invention est de proposer une batterie composée des électrodes précédentes, dont les caractéristiques techniques (tension / courant) peuvent être déterminées selon les besoins et comportant des moyens de connexion afin de relier les électrodes entre elles et avec des bornes extérieures.

Le premier but est atteint en proposant des électrodes comportant les caractéristiques techniques des revendications 1 à 11 .

Le deuxième but est atteint en proposant une batterie et des moyens de connexion tels que décrits dans les revendications 12 à 17.

L'invention est expliquée dans la description qui suit, en regard du dessin comportant les figures où:
la figure 1 représente en perspective, une vue éclatée d'une portion de batterie selon l'invention,
la figure 2 représente une vue par dessus de la portion de batterie de la figure précédente,
les figures 3A à 3J représentent des sections transversales de plusieurs formes d'exécution possibles des brins formant une électrode selon l'invention,
la figure 4 représente en perspective une forme d'exécution tissée d'une électrode,
la figure 5 représente une vue en coupe d'une forme d'exécution possibles de l'empilage des électrodes et des grilles de séparation,
les figures 6A à 6I représentent des sections transversales d'autres formes d'exécution possibles des brins formant une électrode,
la figure 7 représente à échelle agrandie, la superposition de trois brins d'électrodes,
la figure 8 représente une autre forme d'exécution d'une électrode,
les figures 9A et 9B représentent deux formes d'exécution d'un empilage d'électrodes vu par dessus,
les figures 10A et 10B représentent un mode de connexion des électrodes,
les figures 11A et 11B représentent un autre mode de connexion possible des électrodes, et
les figures 12A et 12B représentent deux formes d'exécution de barres de connexion.

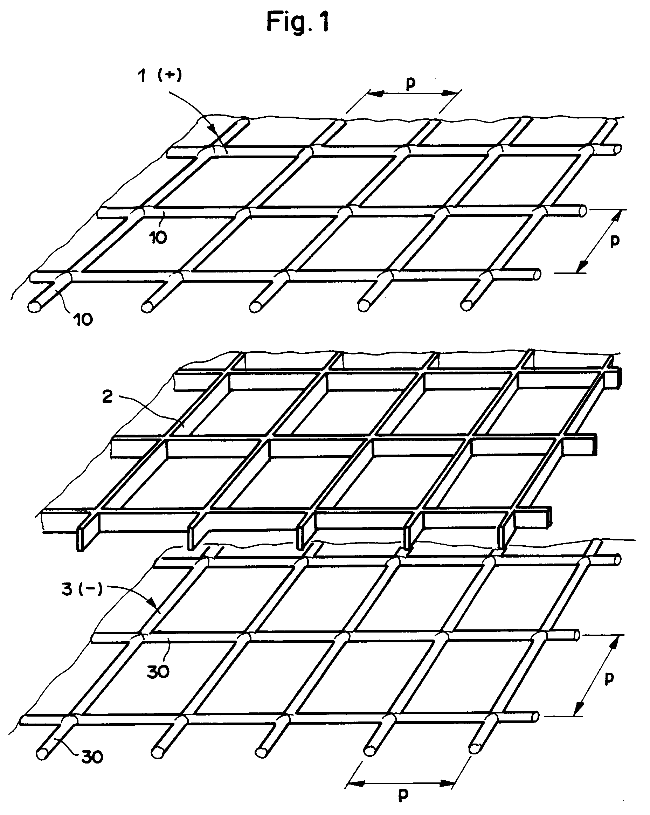

Sur la figure 1, on distingue une portion d'une batterie constituée d'une portion d'électrode positive 1, d'une portion de grille séparatrice 2 et d'une portion d'électrode négative 3, les électrodes positive 1 et négative 3 se présentant aussi sous la forme de grilles.

Les deux électrodes 1 et 3, ainsi que la grille 2 sont représentées ici écartées les unes des autres pour la clarté du dessin, mais on doit comprendre que la batterie est composée de manière générale d'une pluralité de grilles empilées les unes sur les autres selon une séquence telle que: électrode positive 1, grille séparatrice 2, électrode négative 3, grille séparatrice 2, électrode positive 1, grille séparatrice 2,... électrode négative 3. L'empilage peut comprendre au minimum une électrode positive 1, une grille séparatrice 2 et une électrode négative 3 ou jusqu'à plus d'une centaine de tels éléments selon les caractéristiques électriques désirées de la batterie.

De manière générale, chaque électrode positive 1 ou négative 3 est composée d'un assemblage de brins 10, respectivement 30, disposés perpendiculairementçentre eux afin de former une grille. Chaque brin 10 ou 30 est séparé de son voisin d'un pas p, le pas p étant de préférence le même selon chacune des directions transversales de la grille sans que cela soit absolument nécessaire. Le pas p sera de préférence de l'ordre de quelques mm à quelques dizaines de mm.

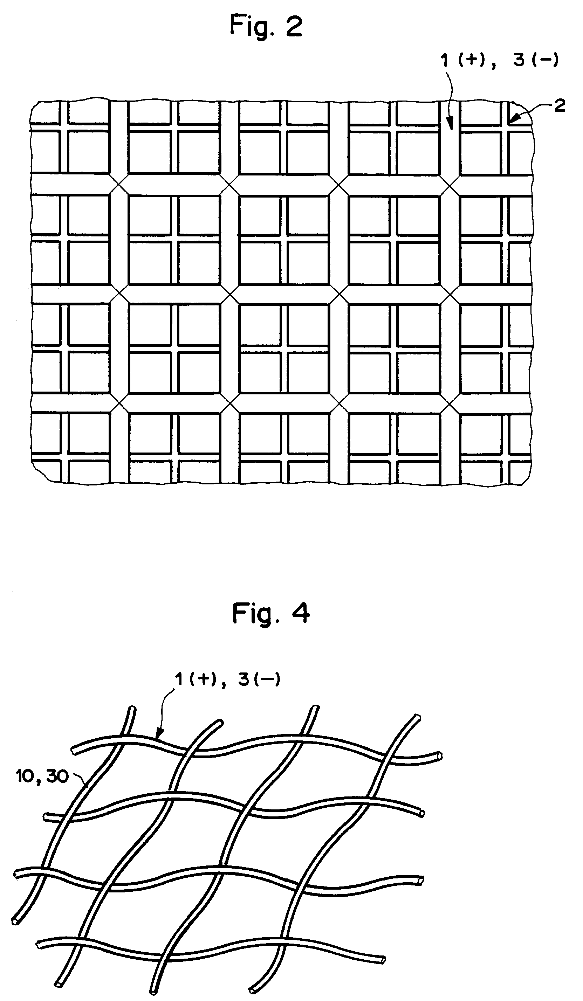

A la figure 2, on voit un empilage de grilles vu par dessus, dans le cas particulier où les électrodes 1 et 3 sont directement alignées entre elles alors que les grilles séparatrices 2 sont décalées d'un demi-pas p par rapport aux précédentes. En fait, vu la faible valeur du pas p par rapport aux dimensions transversales des grilles 1, 2 ou 3, qui peuvent être de l'ordre de quelques dizaines de cm à plus de un mètre, il n'est généralement pas possible d'aligner les grilles de manière prédéterminée; de ce fait elles seront donc plutôt alignées de manière aléatoire. L'important dans l'alignement des grilles est que des espaces libres subsistent entre les brins 10 ou 30 ainsi qu'entre ceux des grilles séparatrices 2 permettant la circulation du liquide diélectrique d'une grille à l'autre pour des raisons qui seront expliquées plus loin.

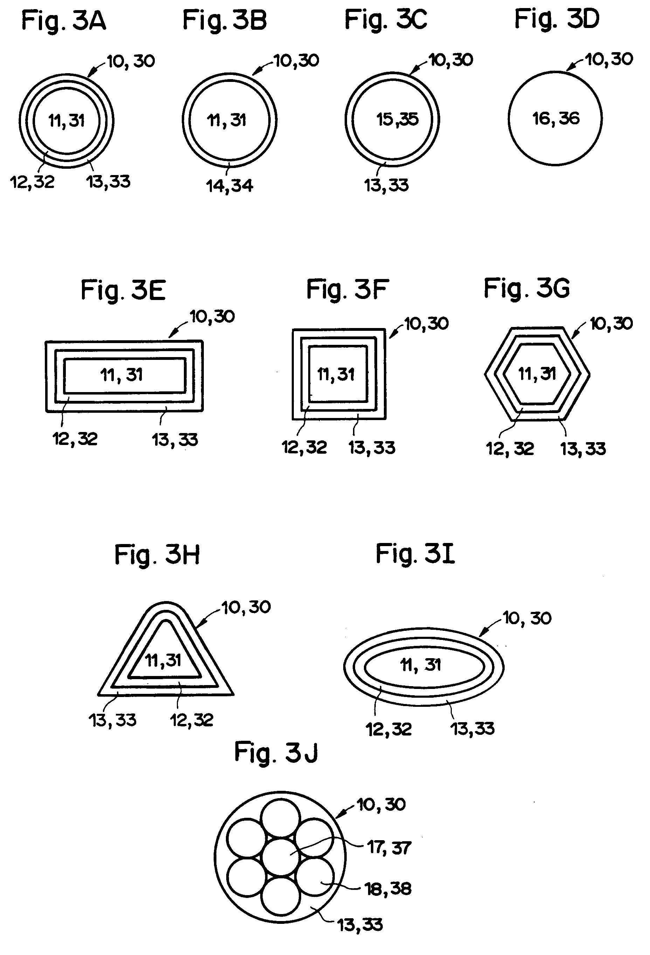

Selon la forme d'exécution d'un brin 10 ou 30, représenté en section transversale à la figure 3A, chaque brin 10 ou 30 comprend premièrement une partie support 11 ou 31, ici de section circulaire, chargée essentiellement d'assurer la tenue mécanique de l'électrode 1 ou 3; cette partie support 11,31 sera donc constituée de préférence en un matériau diélectrique ayant une résistance mécanique et une rigidité adéquate, de préférence un matériau synthétique. Le diamètre des brins de la partie support 11 ou 31 sera de préférence compris entre quelques dixièmes de mm et quelques mm. La partie support de l'électrode 1 ou 3 sera obtenue par n'importe quel procédé connu de la technique, par exemple par moulage, thermoformage, emboutissage, etc. On a donc ainsi une grille isolante, de forme généralement rectangulaire, dont les dimensions sont adaptées ou peuvent être adaptées ultérieurement aux dimensions internes de la cuve de la batterie.

Une couche conductrice 12, respectivement 32, est ensuite déposée sur cette grille. Cette couche conductrice sera chargée de drainer le courant à l'intérieur de la grille électrode 1, respectivement 3, afin de l'amener aux prises de courant comme on le verra plus loin. Vu le faible courant transporté par chaque portion élémentaire d'un brin 10 ou 30 ainsi que vu le maillage serré desdits brins, la couche conductrice 12 ou 32 peut être relativement mince; elle sera en général de l'ordre de quelques µm à quelques dixièmes de mm. Cette couche conductrice est déposée sur la grille isolante par un procédé de déposition connu de la technique, par exemple trempage, vaporisation, dépôt chimique ou électro-chimique d'un alliage comportant au moins un composant bon conducteur comme par exemple du cuivre, de l'aluminium, de l'argent ou de l'or ou de l'un desdits métaux à l'état pur. Le choix de l'alliage, respectivement du métal à déposer sera fait selon le procédé de déposition prévu, les caractéristiques électriques prévues de la batterie, ses dimensions, le matériau utilisé pour les brins support 11 ou 31, ainsi que le type d'électrode, positive 1 ou négative 3.

La grille constituée des brins support 11 ou 31, recouverts d'une couche conductrice 12 ou 32 est ensuite recouverte d'une couche active d'électrode 13 ou 33 afin de former une grille électrode positive 1 ou négative 3. Pour constituer une grille électrode positive 1, la couche active 13, qui peut être solide ou visqueuse, est constituée de préférence en un matériau usuel à cet effet comme par exemple en nickel ou dioxyde de plomb ou tous autres produits actifs, conducteurs ou supraconducteurs obtenus par mélange, alliage, frittage ou autres procédés électrolytiques, mécaniques ou chimiques, alors que pour constituer une grille électrode négative 3, la couche active 33, qui peut aussi être solide ou visqueuse, est aussi constituée de préférence en un matériau usuel à cet effet comme par exemple en fer, cadmium, plomb ou tous autres produits actifs, conducteurs ou supraconducteurs obtenus par mélange, alliage, frittage ou autres procédés électrolytiques, mécaniques ou chimiques. Comme précédemment, vu la faible activité de chaque portion élémentaire d'un brin 10 ou 30 ainsi que vu le maillage serré des grilles électrodes 1 ou 3, l'épaisseur de la couche active 13 ou 33 peut être relativement faible; elle est aussi en général comprise entre quelques µm et quelques dixièmes de mm. La couche active 13 ou 33 est aussi déposée selon l'un des procédés mentionnés plus haut, le choix du procédé étant fait selon l'alliage à déposer ainsi que selon le matériau de la couche conductrice 12 ou 32.

A ce stade de fabrication, on dispose de grilles, relativement souples, d'épaisseur pouvant aller de quelques dixièmes de mm à quelques mm et pouvant être découpées aux dimensions désirées, afin de confectionner des électrodes positives 1, respectivement des électrodes négatives 3, pouvant être assemblées en batterie comme on le verra plus bas. La seule différence entre une électrode positive 1 et une électrode négative 3 peut ne résider que dans la composition de la couche active d'électrode 13 d'une électrode positive 1, par rapport à la couche active d'électrode 33 d'une électrode négative 3.

Diverses variantes peuvent être envisagées pour la construction des électrodes 1 ou 3. En particulier, on peut disposer, comme on le voit sur la figure 3B, d'une couche active d'électrode 14, respectivement 34, constituée d'un matériau actif ayant une conductivité électrique suffisante pour que la couche 14 ou 34 remplisse les fonctions des deux couches 12 et 13, respectivement 32 et 33 de la forme d'exécution décrite précédemment. Cette couche conductrice et active 14 ou 34 est déposée comme indiqué plus haut sur une grille constituée de brins 11 ou 31 telle que décrite auparavant. Selon une autre variante représentée à la figure 3C, le brin 15 ou 35 remplit les fonctions du brin support 11 ou 31 et de la couche conductrice 12 ou 32. Chaque grille électrode 1 ou 3 est donc constituée d'une grille de brins métalliques 15 ou 35 sur lesquels est déposée la couche active 13 ou 33 comme précédemment. Et enfin, comme on le voit sur la figure 3D, on peut avoir une électrode composée de brins 16 ou 36 constitués en un matériau actif, suffisamment conducteur et ayant une résistance mécanique suffisante pour que la juxtaposition de couches ayant des fonctions différenciées ne soit plus nécessaire.

Les électrodes décrites ci-dessus sont toutes constituées à partir de brins 11,31 ou 15,35 ou 16,36 de forme circulaire; il est évident qu'il est possible de prévoir des brins d'une autre forme, par exemple une forme rectangulaire ou carrée comme sur les figure 3E et 3F, une forme polygonale, par exemple un hexagone comme sur la figure 3G, ou un triangle comme sur la figure 3H ou une forme généralement ovale comme sur la figure 3I. Comme on le voit sur la figure 3H, dans le cas d'une forme polygonale comportant une arête vive devant supporter les grilles qui lui seront superposées, il peut être avantageux de former au moins cette arête selon un arrondi. Seules quelques formes géométriques ont été indiquées ici à titre d'exemple, étant bien entendu que d'autres formes peuvent aussi être envisagées. De même, chacun des brins a été représenté dans la variante d'exécution comportant plusieurs couches différenciées, mais il est aussi possible de les prévoir selon les variantes de couches indiquées plus haut.

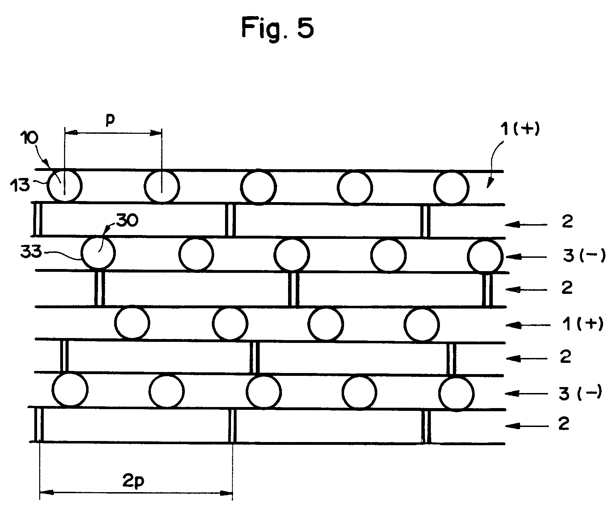

L'électrode peut être constituée, au-lieu d'une grille de brins comme décrit précédemment, de brins élémentaires 10, 30 assemblés entre eux par tissage, comme on le voit sur la figure 4. Dans ce cas, chaque brin 10 ou 30 peut être confectionné comme indiqué précédemment, selon l'une ou l'autre des formes ou variantes de couches indiquées, des procédés de fabrication en continu, comme par exemple une extrusion multi-couche, pouvant aussi être envisagé. Par la suite, le fil est tissé afin de constituer soit une électrode positive 1, soit une électrode négative 3 selon le matériau actif. Pour une électrode tissée, il est aussi possible d'utiliser un brin 10, 30 comme représenté à la figure 3J, constitué d'un corps central toronné, comprenant par exemple un brin central de support mécanique 17 ou 37, entouré d'une pluralité de brins conducteurs 18 ou 38, le tout étant recouvert d'une couche active 13, respectivement 33. L'avantage d'un brin toronné 10, 30 de ce type est qu'il est relativement plus souple qu'un brin plein comme décrit précédemment, se prêtant de ce fait mieux à une opération de tissage.

Dans une portion d'empilages d'électrodes 1 et 3 représentée en coupe comme on le voit à la figures 5, les couches actives 13 des brins 10 des électrodes positives 1 ne doivent pas être en contact avec les couches actives 33 des brins 30 des électrodes négatives 3. Pour ceci, on dispose une grille séparatrice 2 entre chaque électrode 1 ou 3, de façon à les maintenir en position écartée. La figure 2 montre le cas particulier d'une grille séparatrice 2 dont l'écartement des brins correspond au même pas p que celui des grilles des électrodes 1 ou 3, les grilles étant alignées. Comme on le voit à la figure 5, les grilles 1, 2 et 3 sont disposées de manière aléatoire, les brins 10 et 30 n'étant pas alignés les uns sous les autres, ceci représentant la forme générale d'exécution de la batterie. Dans ce cas, le pas des brins des grilles séparatrices 2 n'est pas égal à celui des grilles 1 et 3 mais vaut 2p; de manière générale il peut être quelconque.

Vu que la fonction principale de la grille séparatrice 2 est d'assurer un espacement suffisant entre les électrodes 1 et 3, tout en permettant au liquide diélectrique de circuler perpendiculairement aux plans desdites électrodes, n'importe quel moyen isolant adéquat, résistant aux acides présents lors des réactions, peut être utilisé à cet effet. Il est en particulier possible d'utiliser une grille isolante constituée de brins 11 ou 31 comme décrite plus haut; on peut aussi prendre une grille constituée spécialement à cet effet, comme représentée aux figures 1, 2 et 5, c'est-à-dire constituée de brins dont la hauteur est suffisante pour assurer l'écartement voulu des grilles électrodes 1 et 3 et dont la largeur est minimum afin d'assurer une circulation optimum du liquide diélectrique dans les mailles des grilles. Les mêmes contraintes que décrites ci-dessus s'appliquent aux électrodes tissées comme représentées à la figure 4; dans ce cas il peut aussi être avantageux que la grille séparatrice soit obtenue par tissage de brins isolants.

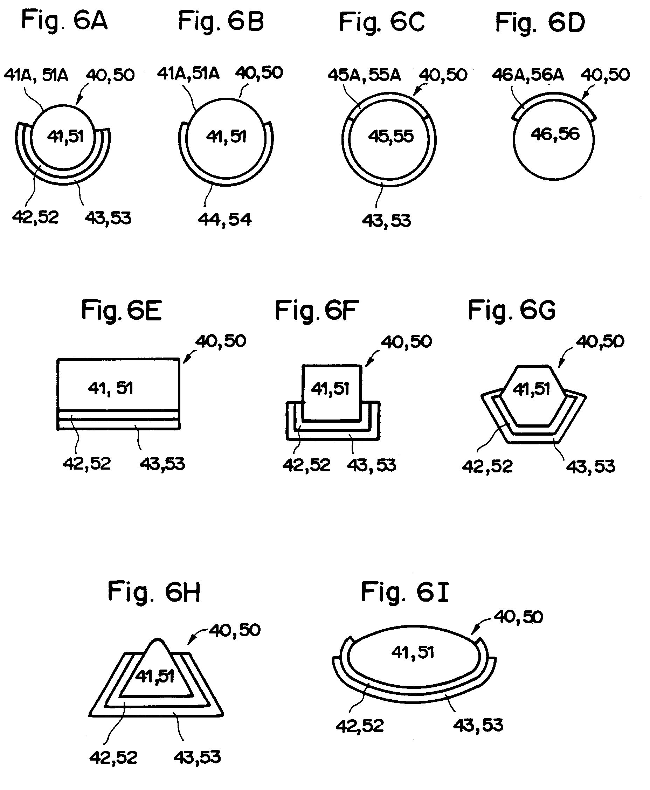

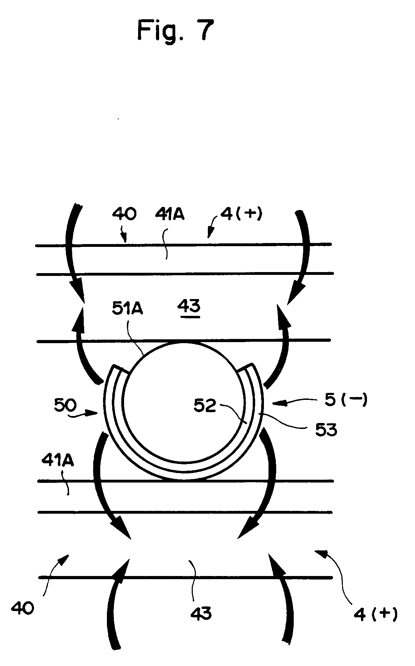

Selon une autre forme d'exécution générale des brins des électrodes, il est possible de supprimer la nécessité d'avoir des grilles séparatrices. Comme on le voit aux figures 6A à 6I, les brins 40 ou 50 formant les électrodes 4 ou 5 ne sont plus que partiellement recouverts des couches conductrices et actives. Dans le cas du brin 40 ou 50 représenté à la figure 6A, la grille constituée de brins isolants 41 ou 51 est absolument semblable à celle décrite précédemment en regard de la forme d'exécution correspondant à la figure 3A. On ne dépose alors sur les brins isolants 41 ou 51 les couches conductrices 42 ou 52 et actives 43 et 53 que sur une portion du périmètre du brin 41 ou 51, de manière à laisser subsister une portion libre 41A ou 51A de matière isolante. Comme on le voit à la figure 7 où on a, à échelle agrandie, un brin 50 d'une électrode négative 5 entouré de deux brins 40 d'électrodes positives 4, les couches actives 43 et 53 sont séparées par les portions isolantes 41A et 51A. La détermination de l'amplitude de la portion du pourtour du brin 41 ou 51 qui doit être recouverte des couches conductrices 42,52 et actives 43, 53 dépend de la quantité de matériau actif nécessaire dans la couche active 43 ou 53 ainsi que de l'espace isolant minimum nécessaire entre deux grilles 4 et 5 consécutives afin des les isoler complètement et éviter en particulier que, lors des réactions électro-chimiques de charge ou de décharge de la batterie, des ponts de matière active ne se forment entre les couches actives des électrodes. L'isolation entre les électrodes devra aussi être assurée dans le cas de légers mouvements relatifs des électrodes entre elles, dus par exemple à des trépidations d'un véhicule sur lequel est installée une batterie composée de tels éléments.

La méthode de fabrication des électrodes 4 ou 5 diffère de ce qui a été décrit plus haut concernant les électrodes 1 ou 3 dans la mesure où il est nécessaire de prévoir des masques afin que les couches conductrices 42,52 et/ou actives 43,53 ne se déposent pas sur toute la surface extérieure des électrodes et qu'une face isolante de celles-ci subsiste. Ces opérations de masquage sont connues en elle-mêmes pour d'autres applications. Il est aussi possible de retirer une portion des couches conductives et actives déjà déposées, par une attaque chimique ou mécanique, par exemple par sablage, des couches déposées sur la portion de surface devant rester isolante. Selon une autre variante d'exécution, il est aussi possible de recouvrir une face de chaque électrode d'une couche isolante. Les mêmes méthodes que décrites ci-dessus peuvent être utilisées pour les électrodes tissées.

Comme précédemment, des variantes d'exécution des couches peuvent être prévues. A la figure 6B on a un brin isolant 41 ou 51 recouvert partiellement d'un portion de couche active 44 ou 54 possédant des propriétés de conduction. La figure 6C montre la variante où le brin 45 ou 55 est conducteur; dans ce cas il est nécessaire de déposer une portion de couche isolante 45A ou 55A en opposition à la couche active 43 ou 53. Dans le cas du brin 46, 56 de la figure 6D possédant des qualités de support, conductrices et actives, il est aussi nécessaire de déposer une couche partielle isolante 46A ou 56A. A la figure 6E, on a un brin de forme générale rectangulaire 41 ou 51 dont seule une face est recouverte d'une couche conductrice 42,52 et d'une couche active 43 ou 53, alors qu'un brin semblable de forme carrée, comme à la figure 6E voit en plus deux de ses faces latérales partiellement recouvertes desdites couches. A la figure 6G, on voit en particulier que la couche active 43 ou 53 peut complètement enfermer la couche conductrice 42 ou 52. La figure 6H montre la variante appliquée à une forme triangulaire, alors que la figure 6I la montre appliquée à une forme ovale: on voit ici que contrairement à la variante de la figure 6G, la couche conductrice 42 ou 52 peut dépasser de la couche active 43 ou 53. Il est bien entendu que les variantes de formes décrites ici ne sont pas exhaustives et qu'elle peuvent aussi être combinées avec les variantes d'exécutions de couches mentionnées plus haut.

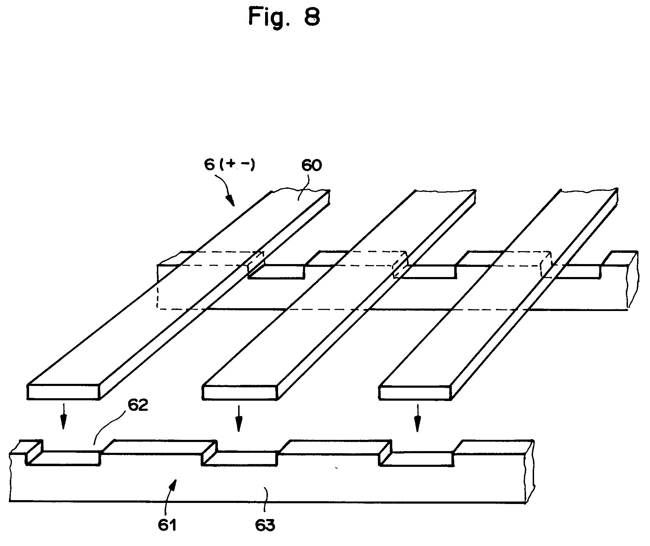

La figure 8 montre encore une autre forme d'exécution d'une électrode 6, pouvant être positive ou négative, composée de brins actifs 60 maintenus par des brins supports 61. Les brins actifs 60, par exemple de forme rectangulaire, sont constitués selon l'une quelconque des variantes d'exécution des couches décrites précédemment. Les brins supports 61 sont de préférence constitués d'un matériau isolant, leur section transversale pouvant être quelconque, ici rectangulaire, et comportant de préférence des encoches 62 afin d'y loger et fixer les brins actifs 60. Comme on le voit sur la figure 8, pour constituer une électrode 6, on dispose de manière espacée une pluralité de brins supports 61, parallèlement entre eux, et on installe une pluralité de brins actifs 60, parallèlement entre eux et perpendiculairementéaux brins supports 61, chacun des brins actifs 60 étant introduit dans les encoches 62 alignées des brins supports 61, comme représenté par les flèches de la figure. De cette manière, on obtient une électrode 6, suffisamment rigide, aussi en forme de grille, des électrodes de polarité inverse pouvant être superposées puisque les brins supports 61 comprennent une surépaisseur 63 isolant chaque électrode 6 par rapport à celle qu'elle recouvre.

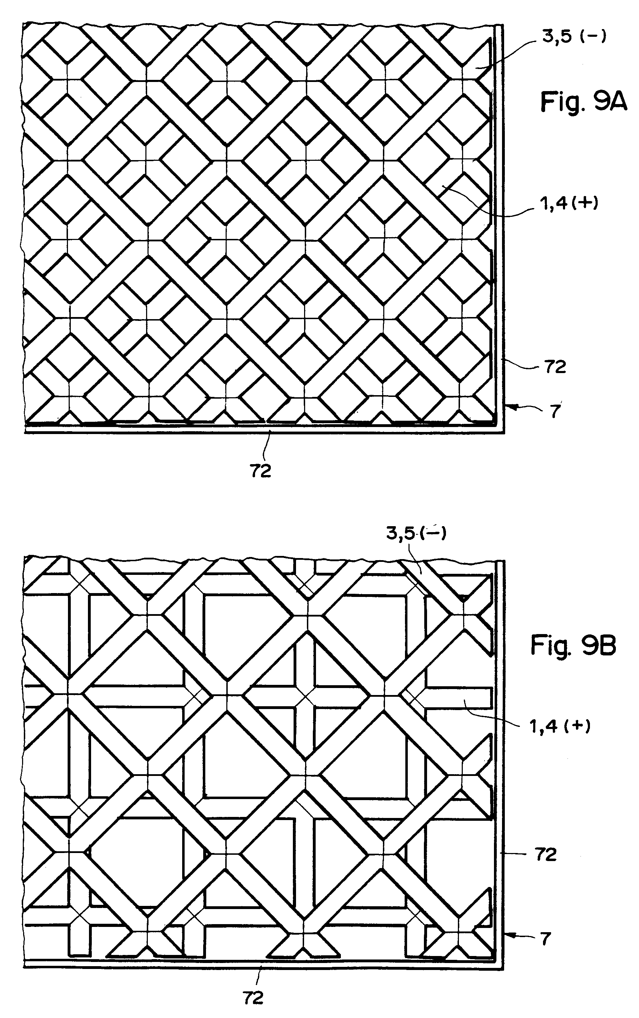

On a toujours considéré jusqu'ici que les électrodes étaient disposées de manière à ce que les brins qui les composent soient tous orientés parallèlement ou perpendiculairement entre eux et avec les parois latérales de la cuve de la batterie. Il est évidemment aussi possible de prévoir d'autres dispositions, comme on le voit schématiquement aux figures 9A et 9B. A la figure 9A, on a une électrode supérieure, par exemple une électrode négative 3 ou 5 qui est superposée à une électrode inférieure, par exemple une électrode positive 1 ou 4. Seules deux électrodes sont représentées, à l'exclusion d'éventuelles grilles de séparation, afin de ne pas surcharger la figure. Dans le cas représenté ici, les deux électrodes, ainsi que les autres grilles non représentées de la batterie restent disposées de manière à ce que leurs brins soient parallèles ou perpendiculaires, ces brins se présentant tous selon un certain angle, ici 45°, par rapport aux parois latérales 72 de la cuve 7 de la batterie. A la figure 9B, seule la moitié des électrodes, par exemple les négatives 3 ou 5 sont tournées de 45° alors que l'autre moitié des électrodes reste avec ses brins parallèles ou perpendiculaires aux parois latérales 72. De manière plus générale, et quelle que soit la forme d'exécution des électrodes, l'orientation des brins entre les électrodes et avec les parois latérales de la cuve de batterie n'a pas d'importance et peuvent être quelconques.

En revenant à la figure 7, on voit les flèches incurvées schématisant la circulation des ions+ entre les électrodes négatives 5 et positives 4 lors d'une décharge de la batterie. Il est évident que lors de la charge de la batterie, les sens des flèches seront inversés. La circulation des ions+ est semblable pour les batteries comportant une grille de séparation entre les électrodes ou pour la forme d'exécution d'une électrode constituée de brins actifs et de brins supports comme sur la figure 8. La circulation des ions+ et/ou des électrons e- selon le sens opposé, crée un échauffement local du liquide diélectrique entourant les électrodes, provoquant de ce fait une circulation par effet thermique de convection dudit liquide diélectrique. C'est pour cette raison que les électrodes positives et négatives ainsi que l'éventuel séparateur sont confectionnés sous forme de grilles, laissant de larges espaces entre les brins pour la circulation du liquide diélectrique. Lorsque le liquide diélectrique aura traversé toutes les électrodes en s'échauffant graduellement, ainsi que les éventuelles grilles de séparation, il arrivera contre la plaque de couvercle supérieure de la cuve de la batterie où il se refroidira et s'écoulera le long de cette plaque ainsi que le long des parois latérales de la cuve de batterie pour recommencer son circuit vers l'électrode inférieure de la batterie.

Les ions+ alimentant ou produits par la réaction entre les électrodes négatives et positives s'écoulent par les parties conductrices des brins, que ces parties conductrices soient formées d'une couche distincte ou soient combinées avec d'autres parties de chaque brin comme expliqué précédemment. Il s'agit ensuite de recueillir ces courants élémentaires circulant dans chaque brin des électrodes afin de les amener vers les bornes positives ou négatives de la batterie. Afin de limiter la résistance électrique de chaque brin, respectivement de limiter l'épaisseur de la couche conductrice déposée sur chaque brin et pour limiter les échauffements dûs à une trop grande densité de courant, il est avantageux que le maximum des brins d'une électrode déterminée soient connectés ensemble à un dispositif de connexion.

Dans les cas d'exécution où la couche conductrice de chaque brin n'est pas directement visible, soit ceux où elle est recouverte d'une couche active, il est nécessaire, de retirer la couche active sur une certaine largeur de la bordure de chacune des électrodes. Pour ceci, dépendant du type de couche active en question, différentes possibilités existent pour cette opération; on peut par exemple soumettre les bordures des électrodes à une abrasion mécanique ou alors les tremper dans un bain d'attaque permettant que sur les bordures en question, la couche ou une partie conductrice des brins soit mise à nu.

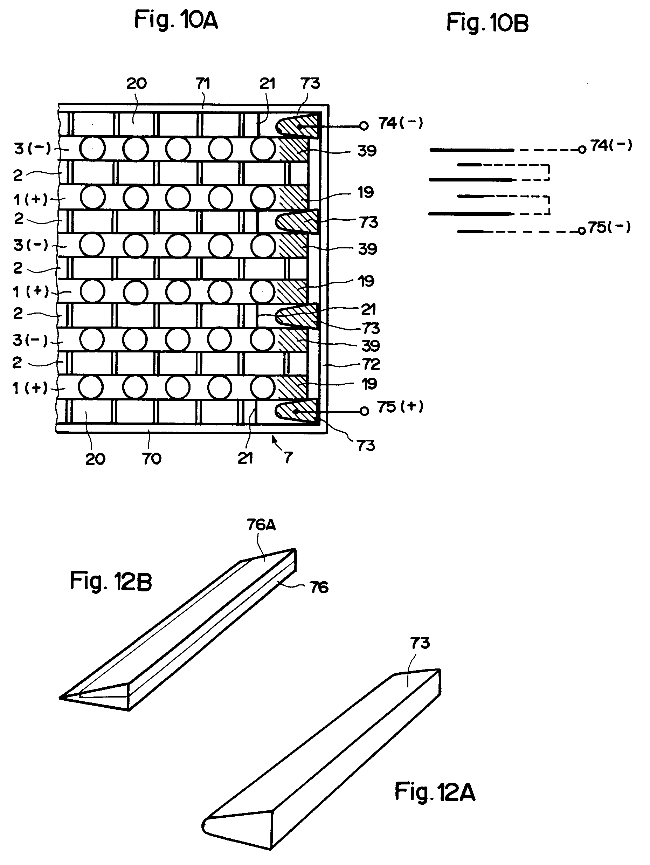

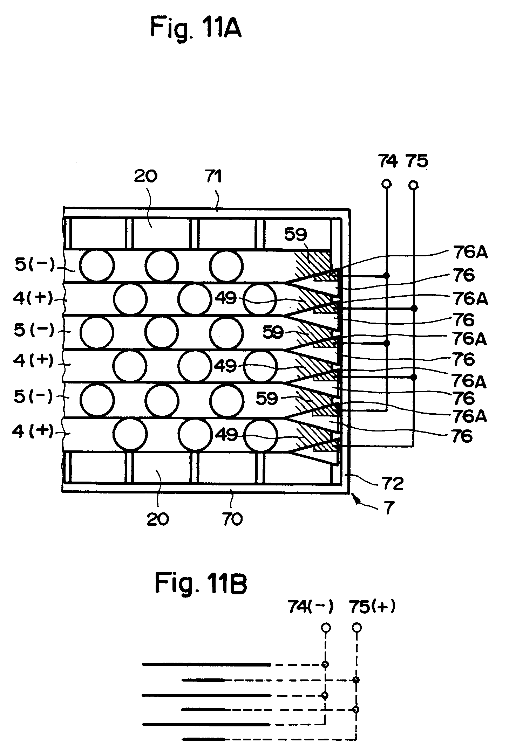

Des moyens prévus pour collecter le courant sur les bordures des électrodes positives ou négatives sont représentés aux figures 10A et 11A.

A la figure 10A, on a une portion vue en coupe d'une batterie enfermée dans une cuve 7 comportant une paroi de fond 70, une paroi de couvercle 71 et des parois latérales dont seule la paroi latérale 72 est représentée. La batterie elle-même est constituée ici de six électrodes, trois électrodes positives 1 et trois électrodes négatives 3, séparées par des grilles de séparation 2. Deux autres grilles de séparation 20 sont de préférence prévues au-dessous et au-dessus de l'empilage d'électrodes afin d'isoler celles-ci des parois 70 et 71 de la cuve 7. Ces grilles 20 seront de préférence légèrement différentes des grilles 2 décrites jusqu'à maintenant dans la mesure où des conduits situés dans le plan desdites grilles sont prévus pour permettre la circulation du liquide diélectrique comme décrite plus haut. On peut voir sur les bordures des électrodes 1 et 3, des zones conductrices 19 et 39 préparées comme indiqué précédemment. Pour le mode de connexion des électrodes en série, comme on le voit schématiquement représenté à la figure 10B, on dispose de barres de connexion 73, entièrement conductrices, que l'on dispose entre les bordures des électrodes que l'on désire relier. Dans l'exemple représenté, et en comptant les électrodes depuis le haut, on a une première barre de connexion 73 en contact avec la zone conductrice 39 de la première électrode négative 3, cette première barre de connexion 73 comportant une connexion représentée schématiquement la reliant à la borne négative 74 de la batterie. Une deuxième barre de connexion 73 met en liaison série la première électrode positive 1 et la deuxième électrode négative 3 et une troisième barre de connexion 73 met en contact série la deuxième électrode positive 1 et la troisième électrode négative 3. La troisième électrode positive 1 est relié par une quatrième barre de connexion à la borne positive 75 de la batterie de la même manière que vu auparavant pour la borne négative 74. On voit sur la figure que les grilles de séparation 2 ou 20 disposées dans les mêmes plans que les barres de connexion 73 sont arrêtées en 21 afin de laisser la place auxdites barres de connexion. Les barres de connexion 73 sont de préférence légèrement plus épaisses que l'épaisseur d'une grille de séparation 2 et présentent deux faces d'appui légèrement inclinées afin d'être pressées entre les bordures conductrices des électrodes et d'assurer un bon contact électrique.

La figure 11A représente une batterie semblable à la précédente mais composée d'électrodes ne nécessitant pas de grilles de séparation intermédiaires. Comme pour l'exemple précédent, l'empilage d'électrodes est de préférence pris entre deux grilles isolantes 20 afin de l'isoler des parois 70 et 71 de la cuve 7 de la batterie. Une bordure au-moins de chaque électrode 4 ou 5 est traitée afin de laisser apparaître une zone conductrice 49 ou 59 comme auparavant. Vu que l'espace entre les électrodes 4 ou 5 est très faible, les barres conductrices 76 devront dans ce cas être assez effilées afin de pouvoir s'insérer entre deux électrodes consécutives. De plus et pour un couplage en parallèle des électrodes, comme représenté schématiquement à la figure 9B, il est nécessaire d'isoler les zones conductrices 49 des zones conductrices 59; pour ceci les barres de connexion ne comportent qu'une portion 76A de leur surface qui est conductrice, alors que le reste est isolant. Dans l'exemple représenté et vu le type de couplage désiré, chacune des barres de connexion 76 comporte une liaison vers l'une des bornes 74 ou 75 de la batterie.

La forme générale des barres de connexion 73 ou 76 se voit bien sur les figures 12A et 12B; la longueur de la barre de connexion correspond approximativement à la dimension longitudinale des bordures des électrodes, leur épaisseur est fonction de l'effet de serrage désiré alors que leur largeur est choisie afin d'avoir une surface de contact suffisante pour assurer un bon contact.

Des dispositifs semblables peuvent être prévus pour les électrodes sous forme tissée, comme représentée à la figure 4 ou sous forme de brins actifs entrecroisés avec des brins supports comme sur la figure 8. Dans ce dernier cas, il est aussi possible de prévoir des parties conductrices sur les brins supports 61 afin d'effectuer des connexions entre les brins actifs 60 et/ou entre les électrodes 6, selon le mode de couplage désiré. On peut alors ne pas avoir besoin de barres de connexion telles que décrites plus haut.

On a représenté et décrit deux types de couplage pour six électrodes, mais il est bien entendu que tout autre type de couplage, par exemple la mise en série de plusieurs groupes d'électrodes connectées en parallèle, ou alors la mise en parallèle de plusieurs groupes d'électrodes connectées en série peuvent aussi être réalisés, pour un nombre pair quelconque d'électrodes, avec les éléments décrits ici. Dans certains cas, il peut être aussi judicieux de pouvoir disposer de barres isolantes, semblables aux barres de connexion 73 ou 76, mais entièrement isolantes. Les couplages ont été décrits s'effectuant sur une seule face latérale des batteries; il peut être avantageux que ces couplages se répartissent sur plusieurs des faces latérales de la batterie afin de mieux répartir le drainage du courant sur les électrodes et de limiter les échauffements. Dans ce cas, au-lieu de barres de connexion, on peut avoir des cadres de connexion dont les dimensions correspondent aux dimensions des côtés des électrodes. Les connexions entre les barres de connexion 73 ou 76 et les bornes 74 et 75 ont été schématisées à l'extérieur de la cuve 7; il est aussi tout à fait possible que ces connexions soient disposées à l'intérieur de la cuve 7, par exemple entre les bordures des électrodes et l'une ou l'autre des parois latérales 72.

D'autres moyens que ceux décrits peuvent être utilisés pour effectuer les connexions nécessaires entre les électrodes et vers les bornes positive 75 et négative 74 de la batterie. Par exemple, les électrodes peuvent être connectées en série par sertissage ou soudure des zones conductrices de leurs bordures ou alors des pinces de contact peuvent venir serrer une ou deux bordures superposées, des conducteurs de liaison pouvant même directement être soudés sur lesdites bordures. Plusieurs des moyens décrits peuvent être combinés entre eux, ceci sur une ou plusieurs des faces latérales de la batterie.

Après que les électrodes aient été découpées aux dimensions requises, qu'une ou plusieurs de leurs bordures aient été traitées afin d'en découvrir les parties conductrices, il est possible d'assembler une batterie, comme on le voit sur les figures 10A ou 11A. On dépose tout d'abord sur le fond 70 la grille de séparation 20, puis le cadre ou la barre de connexion 73 ou 76 ou les autres moyens de connexion choisis, puis ensuite une première électrodes 1 ou 3, respectivement 4 ou 5, puis si nécessaire une grille de séparation 2 ainsi que les moyens de connexion nécessaires, puis une nouvelle électrode de polarité opposée à la précédente et ainsi de suite jusqu'à ce que le nombre d'électrodes correspondant aux caractéristiques électriques désirées de la batterie soient atteintes. Si nécessaire, on peut revêtir les zones conductrices encore visibles après que les connexions aient été établies, d'un revêtement adéquat afin de les préserver des effets corrosifs du liquide diélectrique. On termine l'opération en déposant la grille de séparation supérieure 20 et en appliquant une légère compression à l'empilage d'électrodes afin d'assurer un bon contact électriques entre les éléments de connexion et d'éviter un déplacement relatif des électrodes lors de l'utilisation de la batterie. Au cas où les connexions entre électrodes sont internes à la cuve 7, celles-ci peuvent être établies au cours du montage de la pile d'électrodes. Il suffit ensuite de déposer la paroi de couvercle 71 et de la fixer de manière connue aux parois latérales 72, d'installer les bornes 74 et 75 et de les relier aux connexions correspondantes puis de remplir la batterie de son liquide diélectrique.

En variante, il est aussi possible de monter la batterie à l'extérieur de la cuve, les éléments 70, 71 et 72 des figures 10A et 11A représentant alors des portions d'un châssis 7 sur lequel les électrodes et les grilles sont montées comme décrit plus haut. Ensuite le châssis 7 est introduit dans la cuve de la batterie qui est alors refermée comme déjà indiqué.

Ainsi, la batterie électrique selon l'invention comprenant des électrodes comme décrites ci-dessus a l'avantage par rapport aux batteries usuelles connues, d'être nettement moins lourdes que celles-ci vu que la quantité de matériau actif sur les électrodes est celle nécessaires uniquement aux réactions électro-chimiques, la conductance électrique ainsi que la tenue mécanique des électrodes étant assurées par d'autres moyens. De par sa faible masse, une telle batterie est particulièrement destinée à être embarquée sur un véhicule, bien qu'une utilisation statique soit évidemment aussi possible. Un avantage sur d'autres types de batteries à masse réduite est que la batterie selon l'invention peut être employée de la même manière qu'une batterie conventionnelle, sans moyens auxiliaires de chauffage par exemple. Vu la disposition horizontale des électrodes, celles-ci peuvent être logées dans une cuve de relativement faible hauteur mais pouvant avoir des dimensions de largeur et de longueur relativement importantes telle que décrite dans la demande EP-92810450.4.

## Revendications

1. Electrode pour une batterie électrique, caractérisée en ce qu'elle comprend une première pluralité de brins (10,30;40,50; 61),disposés parallèlement entre eux, régulièrement espacés, une deuxième pluralité de brins (10,30;40,50;60), disposés parallèlement entre eux, régulièrement espacés, et disposés perpendiculairementåà ladite première pluralité de brins, chacun des brins des deux dites pluralités de brins ayant des propriétés de résistance mécanique, chacun des brins d'au moins une des deux dites pluralités de brins ayant des propriétés de conductance électrique et d'activité électro-chimique afin de former une électrode active.

2. Electrode selon la revendication 1, caractérisée en ce que les brins faisant partie de la ou des pluralités de brins formant une électrode active sont constitués d'une partie centrale (11,31; 17,37;41,51) en un matériau isolant ayant des propriétés de résistance mécanique, au moins une portion du pourtour de ladite partie centrale étant recouverte d'une couche (12,32;18,38;42,52) d'un matériau conducteur, ladite couche de matériau conducteur étant recouverte d'une couche (13,33;43,53) d'un matériau ayant des propriétés d'activité électro-chimique.

3. Electrode selon la revendication 1, caractérisée en ce que les brins faisant partie de la ou des pluralités de brins formant une électrode active sont constitués d'une partie centrale (11,31; 41,51) en un matériau isolant ayant des propriétés de résistance mécanique, au moins une portion du pourtour de ladite portion centrale étant recouverte d'une couche (14,34; 44,54) d'un matériau conducteur ayant également des propriétés d'activité électro-chimique.

4. Electrode selon la revendication 1, caractérisée en ce que les brins faisant partie de la ou des pluralités de brins formant une électrode active sont constitués d'une partie centrale (15,35; 45,55) conductrice ayant des propriétés de résistance mécanique, au moins une portion de ladite portion centrale étant recouverte d'une couche (13,33:43,53) d'un matériau ayant des propriétés d'activité électro-chimique.

5. Electrode selon la revendication 1, caractérisée en ce que les brins faisant partie de la ou des pluralités de brins formant une électrode active (16,36;46,56) sont constitués en un matériau ayant des propriétés de résistance mécanique, de conductance et d'activité électro-chimique.

6. Electrode selon la revendication 1, caractérisée en ce que les brins sont constitués d'une pluralité de filaments (17,37,18,38) assemblés en toron, au moins un (17,37) desdits filaments ayant des propriétés de résistance mécanique, au moins un (18,38) desdits filaments ayant des propriétés de conductance électrique, au moins une portion dudit toron étant recouverte d'une couche (13,33) d'un matériau ayant des propriétés d'activité électro-chimique.

7. Electrode selon l'une des revendications 2 à 5, caractérisée en ce que les brins des deux dites pluralités de brins sont des brins formant une électrode active, les brins de la première pluralité de brins et les brins de la deuxième pluralité de brins étant réunis afin de former une grille.

8. Electrode selon l'une des revendications 2 à 5, caractérisée en ce que les brins formant ladite première pluralité de brins (61) sont constitués en un matériau isolant ayant des qualités de résistance mécanique, et comprennent une pluralité de logements (62) régulièrement espacés, chacun des brins de la deuxième pluralité de brins (60) formant l'électrode active étant maintenu dans les logements alignés de ladite première pluralité de brins qui comprennent en outre au moins une portion isolante (63) s'étendant transversalement au plan constitué par les brins de la deuxième pluralité de brins.

9. Electrode selon l'une des revendications 2 à 6, caractérisée en ce que les brins des deux dites pluralités de brins sont des brins formant une électrode active, les brins de la première pluralité de brins et les brins de la deuxième pluralité de brins formant un tissu.

10. Electrode selon l'une des revendications 7 à 9, caractérisée en ce que le matériau (13;14;16; 43;44;46),ayant des propriétés d'activité électrochimique est choisi parmi les matériaux usuels à cet effet, afin d'obtenir une électrode de polarité positive (1;4).

11. Electrode selon l'une des revendications 7 à 9, caractérisée en ce que le matériau (33;34;36; 53;54;56) ayant des propriétés d'activité électrochimique est choisi parmi les matériaux usuels à cet effet, afin d'obtenir une électrode de polarité négative (3;5).

12. Batterie électrique composée d'une pluralité d'électrodes positives (1) selon les revendications 7 ou 9 et la revendication 10 et d'une même pluralité d'électrodes négatives (3) selon les revendications 7 ou 9 et la revendication 11, caractérisée en ce que les matériaux ayant des propriétés d'activité électro-chimique recouvrent entièrement les brins desdites électrodes et en ce qu'une grille de séparation isolante (2) sépare chacune desdites électrodes des électrodes voisines, lesdites électrodes positives et négatives ainsi que les grilles de séparation étant empilées selon des plans horizontaux parallèles, des espaces suffisants étant prévus dans les mailles des électrodes et des grilles superposées afin de permettre un écoulement du liquide diélectrique transversalement auxdites électrodes et grilles, des moyens de connexion (73) étant disposés sur au-moins une bordure latérale conductrice (19,39) de chacune des électrodes permettant de relier électriquement les électrodes entre elles et/ou avec des bornes extérieures (74,75).

13. Batterie électrique composée d'une pluralité d'électrodes positives (4) selon les revendications 7 ou 9 et la revendication 10 et d'une même pluralité d'électrodes négatives (5) selon les revendications 7 ou 9 et la revendication 11, caractérisée en ce que les matériaux ayant des propriété d'activité électro-chimique ne recouvrent qu'une portion de surface des brins des électrodes, une face (41A,51A;45A,55A; 46A,56A) de chacune desdites électrodes étant isolante, lesdites électrodes positives et négatives étant empilées selon des plans horizontaux parallèles, la face isolante d'une électrode étant en contact avec la face non isolante de l'électrode qui la suit, des espaces suffisants étant prévus dans les mailles des électrodes superposées afin de permettre un écoulement du liquide diélectrique transversalement auxdites électrodes, des moyens de connexion (76) étant disposés sur au-moins une bordure latérale conductrice )49,59) de chacune des électrodes permettant de relier électriquement les électrodes entre elles et/ou avec des bornes extérieures (74,75).

14. Batterie électrique composée d'une pluralité d'électrodes (6) positives selon les revendications 8 et 10 et d'une même pluralité d'électrodes (6) négatives selon les revendications 8 et 11, caractérisée en ce que les matériaux ayant des propriétés d'activité électro-chimique recouvrent entièrement les brins de ladite deuxième pluralité de brins (60), lesdites électrodes positives et négatives étant disposées selon des plans horizontaux parallèles, les brins isolants (61) formant la première pluralité de brins d'une électrode étant posés sur les brins (60) formant la deuxième pluralité de brins de l'électrode qui la suit, des espaces suffisants étant prévus dans les mailles des électrodes superposées afin de permettre un écoulement du liquide diélectrique transversalement auxdites électrodes, des moyens de connexion étant disposés sur au-moins une bordure latérale de chacune des électrodes permettant de relier électriquement les électrodes entre elles et/ou avec des bornes extérieures.

15. Batterie selon l'une des revendications 12 à 14, caractérisée en ce que les électrodes (1,3;4, 5;6) ont été découpées selon les dimensions de largeur et de longueur de la cuve (7) de la batterie.

16. Batterie selon la revendications 15, caractérisée en ce que les moyens de connexion sont constitués de barres de connexion (73,76), présentant au moins une face conductrice (76A), mettant en contact une bordure conductrice (19;49) d'une électrode (1;4) avec une autre bordure conductrice (39;59) d'une autre électrode (3;5) ou avec une borne extérieure (74,75).

17. Batterie selon la revendication 15, caractérisée en ce que les moyens de connexion sont constitués d'un sertissage des bordures conductrices des deux électrodes ou d'un sertissage d'une bordure conductrice d'une électrode sur un conducteur de liaison.
